# EUROPEAN PATENT SPECIFICATION

(11) **EP 4 354 673 B1**
(45) Date of publication and mention of the grant of the patent: **01.04.2026**
(21) Application number: 23202886.0
(22) Date of filing: 11.10.2023
(51) Int. Cl.: H01R 13/629

(54) **HOUSING ASSEMBLY FOR ELECTRICAL CONNECTOR**
GEHÄUSEANORDNUNG FÜR EINEN ELEKTRISCHEN VERBINDER
ENSEMBLE BOÎTIER POUR CONNECTEUR ÉLECTRIQUE

(30) Priority: 12.10.2022 CN 202222689288 U
(43) Date of publication of application: 17.04.2024
(73) Proprietor: Tyco Electronics (Suzhou) Ltd., Suzhou City, Jiangsu Province 215126 (CN); Tyco Electronics Technology (SIP) Ltd., Suzhou, Jiangsu (CN); Tyco Electronics (Shanghai) Co., Ltd., Pilot Free Trade Zone Shanghai 200131 (CN)
(72) Inventor: Wu, Zhuangzhi, Suzhou, 32 215123 (CN); Jiang, Kaixuan, Shanghai, 200233 (CN); Zong, Jun, Shanghai, 200233 (CN); Tang, Yihao, Suzhou, 32 215123 (CN)
(74) Representative: Grünecker Patent- und Rechtsanwälte PartG mbB

(56) References cited:
- US-A1- 2020 388 961
- US-B1- 10 135 183
- US-B2- 11 296 459
- US-B2- 7 255 581

## Description

### BACKGROUND

### Field of the Present Disclosure

Embodiments of the present disclosure generally relate to a technical field of electrical connectors, and specifically, to a housing assembly for an electrical connector.

### Description of the Related Art

In the related art, regarding an electrical connector with a built-in locking lever, the locking lever is pivotally connected to a connector housing, and the locking lever can pivot relative to the connector housing between a pre-locked position and a locked position. In order to ensure that the locking lever can be pivoted and positioned effectively between the pre-locked position and the locked position, a lug structure is usually provided on an outer side surface of the connector housing and extends outwardly from the outer side surface, and a pivot action of the locking lever is constrained in a single direction by providing the lug structure on a pivoting path of the locking lever. However, in practice, provision of this lug structure can only constrain the pivot action of the locking lever in the single direction, and cannot achieve stable positioning of the locking lever, thus there is a risk of unwanted pivot action of the locking lever. In addition, provision of this lug structure increases the size of the connector housing, which does not facilitate the miniaturization of the connector housing. US 10 135 183 B1 describes an electrical connector with an assist lever. US 7 255 581 B2, US 11 296 459 B2, and US 2020/388961 A1 describe lever-type connectors.

### SUMMARY

The present disclosure is made in order to overcome at least one aspect of the above-mentioned and other problems and defects in the related art.

According to the invention, there is provided a housing assembly for electrical connector, and the housing assembly includes:
a housing body; and
a locking lever pivotally connected to the housing body and configured to pivot relative to the housing body between a pre-locked position and a locked position;
wherein a groove is formed in an outer side surface of the housing body, and an elastic protrusion is formed on an inner side surface of the locking lever, and the groove and the elastic protrusion are configured such that: the elastic protrusion is engaged into the groove when the locking lever is in the pre-locked position, and the elastic protrusion is disengaged from the groove when the locking lever leaves the pre-locked position.

A sliding groove is also formed in the outer side surface of the housing body, the sliding groove is located adjacent to the groove, and the sliding groove is configured such that: during the locking lever pivots from the pre-locked position to the locked position, the elastic protrusion disengaged from the groove enters into the sliding groove and travels along the sliding groove.

The elastic protrusion further includes: an elastic sheet extending from the inner side surface of the locking lever; and a boss extending and protruding from the elastic sheet.

Furthermore, two opposite ends of the elastic sheet extend from the inner side surface of the locking lever, respectively, two sides of the elastic sheet adjacent to the two opposite ends are separated from the inner side surface of the locking lever, and the boss is located in the middle of the elastic sheet.

According to an exemplary embodiment of the present disclosure, the boss is formed by bending the elastic sheet.

According to an exemplary embodiment of the present disclosure, the elastic protrusion is integrally formed with the inner side surface of the locking lever.

According to an exemplary embodiment of the present disclosure, a wall surface of the groove near the sliding groove is formed with a chamfer; and the boss has an inclined face that matches the chamfer.

According to an exemplary embodiment of the present disclosure, a wall surface of the sliding groove near the groove is formed with a chamfer.

According to an exemplary embodiment of the present disclosure, the locking lever further includes: a pair of arm portions; and a connecting portion connected to the pair of arm portions; wherein the pair of arm portions is pivotally connected to the opposite outer side surfaces of the housing body, respectively; wherein the elastic protrusion is formed on an inner side surface of each of the pair of arm portions, and wherein the groove and the sliding groove are correspondingly formed in each outer side surface of the opposite outer side surfaces of the housing body.

According to an exemplary embodiment of the present disclosure, the locking lever is formed with an error-proofing stopper configured to prevent the locking lever from being pivoted from the pre-locked position in a direction opposite to the locked position.

According to an exemplary embodiment of the present disclosure, the error-proofing stopper extends from each arm portion of the pair of arm portions towards the outer side surface of the housing body.

According to an exemplary embodiment of the present disclosure, the housing assembly is used as an outer housing of an electrical connector for electrical connection to a battery of a new energy vehicle.

According to the connector housing of the forgoing various exemplary embodiments of the present disclosure, the locking lever can be stably locked in its pre-locked position by the engagement between the elastic protrusion formed on the locking lever and the groove formed in the housing body, and when the locking lever needs to be pivoted into the locked position, only a small force needs to be applied to enable the locking lever to smoothly leave the pre-locked position, in this way, a stable locking in the pre-locked position of the locking lever is provided.

According to the connector housing of the forgoing various exemplary embodiments of the present disclosure, the size of the housing body is reduced and the miniaturization of the housing assembly for electrical connector is facilitated.

According to the connector housing of the forgoing various exemplary embodiments of the present disclosure, a better feel of the operation of the locking lever can be provided.

The above and other features of the present disclosure will become more apparent by describing in detail exemplary embodiments thereof with reference to the accompanying drawing, and may help to provide a comprehensive understanding of the present disclosure.

### BRIEF DESCRIPTION OF THE DRAWINGS

Fig. 1 is a schematic structural view of a housing assembly for electrical connector according to an exemplary embodiment of the present disclosure;
Fig. 2 is another schematic structural view of the housing assembly for electrical connector according to an exemplary embodiment of the present disclosure;
Fig. 3 is a schematic structural view of a housing body of the housing assembly for electrical connector according to an exemplary embodiment of the present disclosure;
Fig. 4 is a schematic structural view of a locking lever of the housing assembly for electrical connector according to an exemplary embodiment of the present disclosure;
Fig. 5 is a schematic enlarged view at the dashed box in Fig. 4; and
Figs. 6-8 are partial structural views of the housing assembly for electrical connector according to an exemplary embodiment of the present disclosure.

### DETAILED DESCRIPTION OF EMBODIMENTS

Embodiments of the present disclosure will be described hereinafter in detail taken in conjunction with the accompanying drawings. In the description, the same or similar parts are indicated by the same or similar reference numerals. The description of each of embodiments of the present disclosure hereinafter with reference to the accompanying drawings is intended to explain the general inventive concept of the present disclosure and should not be construed as a limitation on the present disclosure.

In addition, in the following detailed description, for the sake of explanation, numerous specific details are set forth in order to provide a thorough understanding of the disclosed embodiments. It will be apparent, however, that one or more embodiments may also be practiced without these specific details. In other instances, well-known structures and devices are illustrated schematically in order to simplify the drawing.

According to one general technical concept of the present disclosure, there is provided a housing assembly for electrical connector. The housing assembly includes a housing body and a locking lever. The locking lever is pivotally connected to the housing body and configured to pivot relative to the housing body between a pre-locked position and a locked position. A groove is formed in an outer side surface of the housing body, and an elastic protrusion is formed in an inner side surface of the locking lever. The groove and the elastic protrusion are configured such that: the elastic protrusion is engaged into the groove when the locking lever is in the pre-locked position, and the elastic protrusion is disengaged from the groove when the locking lever leaves the pre-locked position.

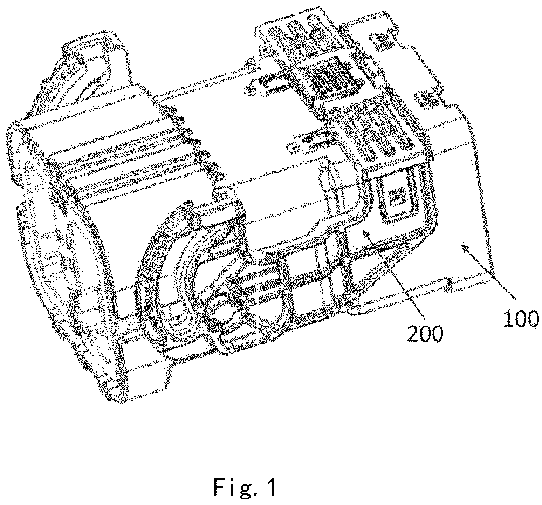

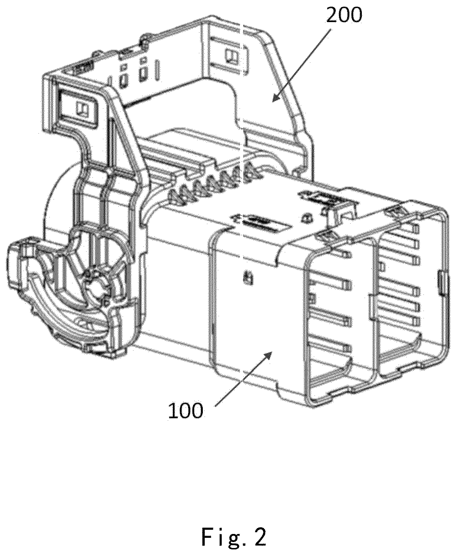

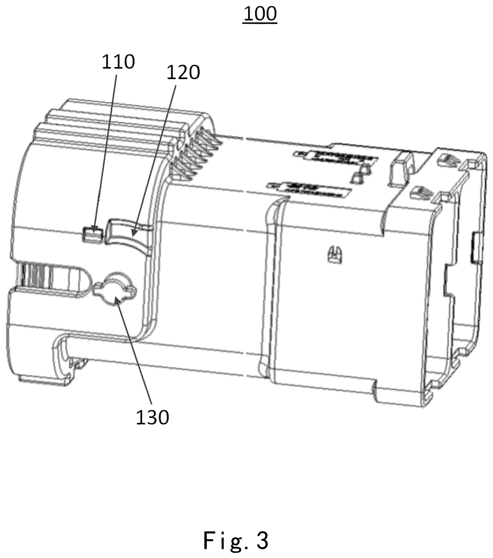

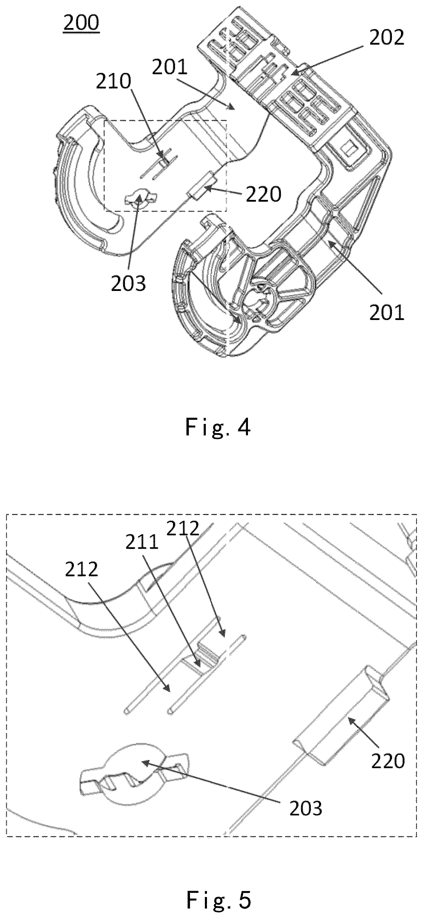

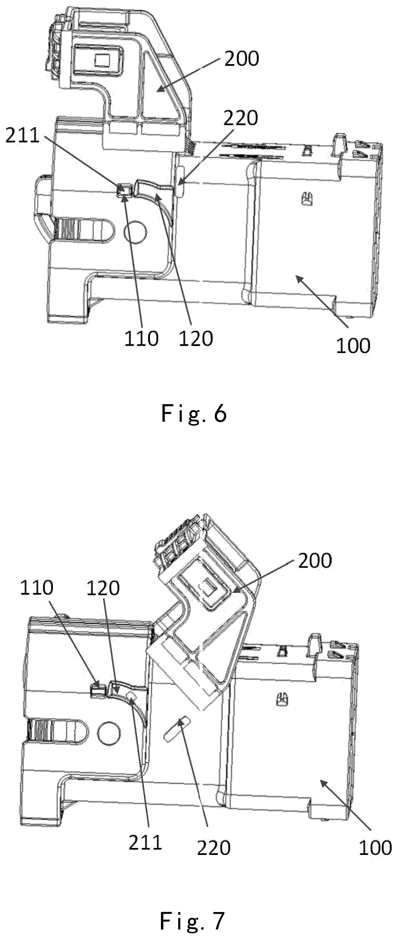

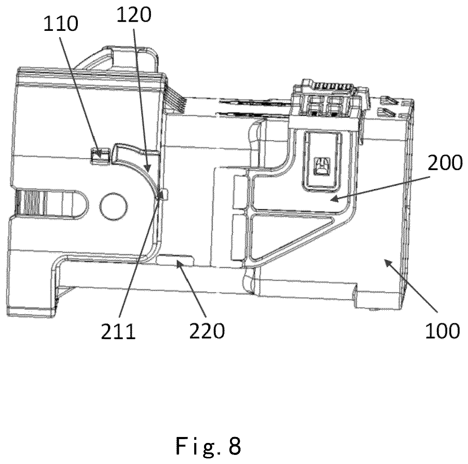

Figs. 1 and 2 are different schematic structural views of a housing assembly for electrical connector according to exemplary embodiments of the present disclosure. Fig. 1 shows that a locking lever 200 is in a pre-locked position relative to a housing body 100, and Fig. 2 shows that the locking lever 200 is in a locked position relative to the housing body 100. Fig. 3 is a schematic structural view of a housing body of the housing assembly for electrical connector according to an exemplary embodiment of the present disclosure, and shows a groove 110 and a sliding groove 120 provided in the outer side surface of the housing body 100. Fig. 4 is a schematic structural view of the locking lever of the housing assembly for electrical connector according to an exemplary embodiment of the present disclosure, and shows an elastic protrusion 120 and an error-proofing stopper 220 provided on the inner side surface of the locking lever 200. Fig. 5 is a schematic enlarged view at the dashed box in Fig. 4, and shows a specific structure of the elastic protrusion 120. Figs. 6-8 are partial schematic structural views of the housing assembly for electrical connector according to an exemplary embodiment of the present disclosure. For clarity, a portion of an arm portion of the locking lever 200 facing out of the paper is omitted in Figs. 6-8 to show a movement trajectory of a boss 211 of the elastic protrusion (to be described in detail below) and the error-proofing stopper 220, wherein Fig. 6 shows the locking lever 200 in the pre-locked position, Fig. 7 shows the locking lever 200 in the process of pivoting from the pre-locked position to the locked position, and Fig. 8 shows the locking lever 200 in the locked position.

According to the exemplary embodiments of the present disclosure, as shown in Figs. 1 to 8, there is provided a housing assembly for electrical connector. The housing assembly mainly includes: a housing body 100 and a locking lever 200. The housing body 100 has at least two ports, and connection terminals (not shown) for electrical connection can be provided in the housing body 100. The locking lever 200 is used to lock a connector including the housing body 100, to a mating connector that matches the connector. The locking lever 200 may be pivotally connected to the housing body 100, for example, by the pivot fitting relationship formed between a pivot shaft 130 (as shown in Fig. 3) formed on the housing body 100 and a pivot shaft hole 203 (as shown in Fig. 4) formed in the locking lever 200. The locking lever 200 is configured to pivot relative to the housing body 100 between a pre-locked position (as shown in Fig. 2) and a locked position (as shown in Fig. 1). According to the exemplary embodiments of the present disclosure, a groove 110 is formed in the outer side surface of the housing body 100, and an elastic protrusion 210 is formed on the inner side surface of the locking lever 200. The groove 110 and the elastic protrusion 210 are configured such that: the elastic protrusion 210 is engaged into the groove 110 when the locking lever 200 is in the pre-locked position, as shown in Fig. 6; and the elastic protrusion 210 is disengaged from the groove 110 when the locking lever 200 leaves the pre-locked position, as shown in Figs. 7 and 8. The locking lever can be stably locked in its pre-locked position by the engagement between the elastic protrusion formed on the locking lever and the groove formed in the housing body due to the aforementioned configuration, and when the locking lever needs to be pivoted to the locked position, only a small force needs to be applied to enable the locking lever to smoothly leave the pre-locked position, thus providing stable locking in the pre-locked position of the locking lever. In addition, in the housing assembly provided by the present disclosure, it is only required that the groove is formed in the outer side surface of the housing body, which can also reduce the size of the housing body and facilitate the miniaturization of the housing assembly.

According to the exemplary embodiment of the present disclosure, as shown in Figs. 3 and 6-8, a sliding groove 120 is also formed in the outer side surface of the housing body 100. Specifically, the sliding groove 120 is located adjacent to the groove 110, and the sliding groove 120 is configured such that: during the locking lever 200 pivots from the pre-locked position shown in Fig. 6 to the locked position shown in Fig. 8, the boss 211 (which will be described in detail later) of the elastic protrusion disengaged from the groove 110 enters into the sliding groove 120 and travels along the sliding groove 120.

According to the exemplary embodiment of the present disclosure, as shown in Figs. 4 and 5, the elastic protrusion 210 may further include: an elastic sheet 212 and the boss 211. Specifically, the elastic sheet 212 extends from the inner side surface of the locking lever 200, and the boss 211 extends and protrudes from the elastic sheet 212. In the illustrated exemplary embodiment, two opposite ends of the elastic sheet 212 extend from the inner side surface of the locking lever 200, respectively, two sides of the elastic sheet 212 adjacent to the two opposite ends are separated from the inner side surface of the locking lever 200, and the boss 211 is located approximately in the middle of the elastic sheet 212. In addition, the boss 211 may be formed by bending the elastic sheet 212. Of course, in other embodiments not shown, on the premise of achieving the elastic locking, the locking lever 200 may adopt other suitable structures. For one example, only one end of the elastic sheet 212 extends from the inner side surface of the locking lever 200, for another example, the boss 211 is located at a free end of the elastic sheet 212, and so on. Preferably, the elastic protrusion 210 is integrally formed with the inner side surface of the locking lever 200, but the present disclosure is not limited to this.

According to the exemplary embodiment of the present disclosure, as shown in Figs. 4 and 5, a wall surface of the groove 110 near the sliding groove 120 is formed with a chamfer, and the boss 211 has an inclined face that matches the chamfer. Therefore, the boss 211 of the locking lever 200 is facilitated to slide smoothly into or out of the groove 110 formed in the housing body 100 by the fitting between the chamfer and the inclined face. Furthermore, a wall surface of the sliding groove 120 near the groove 110 is formed with a chamfer, which is facilitated for the boss 211 disengaged from the groove 110 to slide smoothly into or out of the sliding groove 120 formed in the housing body 100. It is possible to provide a better feel of the operation of the locking lever by the aforementioned configuration.

According to the exemplary embodiment of the present disclosure, as shown in Fig. 4, the locking lever 200 further includes a pair of arm portions 201 and a connecting portion 202. The connecting portion 202 is connected to the pair of arm portions 201. The pair of arm portions 201 is pivotally connected to the opposite outer side surfaces of the housing body 100, respectively. The elastic protrusion 210 is formed on the inner side surface of each arm portion 201 of the pair of arm portions 201, and the groove 110 and the sliding groove 120 are correspondingly formed in each outer side surface of the opposite outer side surfaces of the housing body 100.

According to the exemplary embodiment of the present disclosure, as shown in Figs. 4 to 8, the locking lever 200 is formed with an error-proofing stopper 220. The error-proofing stopper 220 is configured to prevent the locking lever 200 from being pivoted from the pre-locked position in a direction opposite to the locked position, thereby avoiding excessive free pivoting of the locking lever 200. Specifically, the error-proofing stopper 220 extends from each arm portion 201 of the pair of arm portions 201 towards the outer side surface of the housing body 200. In this way, it can be abutted against a step of a rear end of the port of the housing body 100 when the locking lever 200 is in the pre-locked position, to prevent excessive free pivoting of the locking lever 200.

The housing assembly for electrical connector provided by the exemplary embodiment of the present disclosure may be used as an outer housing of an electrical connector for electrical connection to a battery of a new energy vehicle so as to charge the battery.

According to the connector housing according to the forgoing various exemplary embodiments of the present disclosure, the locking lever can be stably locked in its pre-locked position by the engagement between the elastic protrusion formed on the locking lever and the groove formed in the housing body, and when the locking lever needs to be pivoted into the locked position, only a small force needs to be applied to enable the locking lever to smoothly leave the pre-locked position, in this way, a stable locking in the pre-locked position of the locking lever is provided. In addition, in the housing assembly according to the forgoing various exemplary embodiments of the present disclosure, it is only required that the groove is formed in the outer side surface of the housing body, which can also reduce the size of the housing body and facilitate the miniaturization of the housing assembly. In addition, the housing assembly according to the forgoing various exemplary embodiments of the present disclosure can also provide a better feel of the operation of the locking lever.

It should be appreciated by those skilled in this art that the above embodiments are intended to be illustrative, and many modifications may be made to the above embodiments by those skilled in this art.

Although the present disclosure have been described hereinbefore in detail with reference to the accompanying drawings, it should be appreciated that the disclosed embodiments in the accompanying drawings are intended to illustrate the preferred embodiments of the present disclosure by way of example, and should not be construed as limitation to the present disclosure.

Although some embodiments of the general inventive concept of the present disclosure have been shown and described, it would be appreciated by those skilled in the art that changes or modification may be made to these embodiments without departing from the principles of the general inventive concept, the scope of which is defined in the claims.

It should be noted that, the word "comprise" or "include" doesn't exclude other elements or steps, and the word "a" or "an" doesn't exclude more than a plurality. In addition, any reference numerals in the claims should not be interpreted as the limitation to the scope of the present disclosure.

## Claims

1. A housing assembly for electrical connector, the housing assembly comprising:
a housing body (100); and
a locking lever (200) pivotally connected to the housing body (100) and configured to pivot relative to the housing body between a pre-locked position and a locked position;
wherein a groove (110) is formed in an outer side surface of the housing body (100), and an elastic protrusion (210) is formed on an inner side surface of the locking lever (200), and the groove and the elastic protrusion are configured such that: the elastic protrusion (210) is engaged into the groove (110) when the locking lever is in the pre-locked position, and the elastic protrusion (210) is disengaged from the groove when the locking lever (200) leaves the pre-locked position; wherein
a sliding groove (120) is also formed in the outer side surface of the housing body (100), the sliding groove (120) is located adjacent to the groove (110), and the sliding groove is configured such that: during the locking lever pivots from the pre-locked position to the locked position, the elastic protrusion (210) disengaged from the groove (110) enters into the sliding groove (120) and travels along the sliding groove; wherein the elastic protrusion (210) further comprises:
an elastic sheet (212) extending from the inner side surface of the locking lever; and
a boss (211) extending and protruding from the elastic sheet (212),
**characterized in that**
two opposite ends of the elastic sheet (212) extend from the inner side surface of the locking lever, respectively, two sides of the elastic sheet adjacent to the two opposite ends are separated from the inner side surface of the locking lever, and the boss (211) is located in the middle of the elastic sheet (212).

2. The housing assembly according to claim 1, wherein
the boss (211) is formed by bending the elastic sheet (212).

3. The housing assembly according to claim 1, wherein
the elastic protrusion (210) is integrally formed with the inner side surface of the locking lever.

4. The housing assembly according to claim 1, wherein
a wall surface of the groove (110) near the sliding groove (120) is formed with a chamfer; and
the boss (211) has an inclined face that matches the chamfer.

5. The housing assembly according to claim 4, wherein a wall surface of the sliding groove (120) near the groove (110) is formed with a chamfer.

6. The housing assembly according to any one of claims 1 to 5, wherein, the locking lever further comprises:
a pair of arm portions (201); and
a connecting portion (202) connected to the pair of arm portions;
wherein the pair of arm portions is pivotally connected to the opposite outer side surfaces of the housing body (100), respectively;
wherein the elastic protrusion (210) is formed on an inner side surface of each arm portion of the pair of arm portions, and
wherein the groove (110) and the sliding groove (120) are correspondingly formed in each outer side surface of the opposite outer side surfaces of the housing body (100).

7. The housing assembly according to claim 6, wherein
the locking lever is formed with an error-proofing stopper (220) configured to prevent the locking lever from being pivoted from the pre-locked position in a direction opposite to the locked position.

8. The housing assembly according to claim 7, wherein
the error-proofing stopper extends from each arm portion of the pair of arm portions towards the outer side surface of the housing body (100).

9. The housing assembly according to any one of claims 1 to 5, wherein
the housing assembly is used as an outer housing of an electrical connector for electrical connection to a battery of a new energy vehicle.

## Patentansprüche

1. Gehäuseanordnung für einen elektrischen Verbinder, wobei die Gehäuseanordnung umfasst:
einen Gehäusekörper (100); sowie
einen Arretierhebel (200), der schwenkbar mit dem Gehäusekörper (100) verbunden und so ausgeführt ist, dass er relativ zu dem Gehäusekörper zwischen einer vorarretierten Position und einer arretierten Position geschwenkt wird;
wobei eine Nut (110) in einer Außenseitenfläche des Gehäusekörpers (100) ausgebildet ist und ein elastischer Vorsprung (210) an einer Innenseitenfläche des Arretierhebels (200) ausgebildet ist und die Nut sowie der elastische Vorsprung so ausgeführt sind, dass der elastische Vorsprung (210) mit der Nut (110) in Eingriff ist, wenn sich der Arretierhebel in der vorarretierten Position befindet, und der elastische Vorsprung (210) aus der Nut gelöst wird, wenn der Arretierhebel (200) die vorarretierte Position verlässt, wobei
eine Gleitnut (120) darüber hinaus in der Außenseitenfläche des Gehäusekörpers (100) ausgebildet ist, die Gleitnut (120) an die Nut (110) angrenzend angeordnet ist und die Gleitnut so ausgeführt ist, dass, wenn der Arretierhebel von der vorarretierten Position an die arretierte Position geschwenkt wird, der aus der Nut (110) gelöste elastische Vorsprung (210) in die Gleitnut (120) eintritt und sich entlang der Gleitnut bewegt, wobei der elastische Vorsprung (210) des Weiteren umfasst:
eine elastische Zunge (212), die sich von der Innenseitenfläche des Arretierhebels aus erstreckt; sowie
eine Wulst (211), die sich von der elastischen Zunge (212) aus erstreckt und vorsteht,
**dadurch gekennzeichnet, dass**
zwei gegenüberliegende Enden der elastischen Zunge (212) sich jeweils von der Innenseitenfläche des Arretierhebels aus erstrecken und zwei an die zwei gegenüberliegenden Enden angrenzenden Seiten der elastischen Zunge von der Innenseitenfläche des Arretierhebels getrennt sind und sich die Wulst (211) in der Mitte der elastischen Zunge (212) befindet.

2. Gehäuseanordnung nach Anspruch 1, wobei
die Wulst (211) durch Biegen der elastischen Zunge (212) ausgebildet wird.

3. Gehäuseanordnung nach Anspruch 1, wobei
der elastische Vorsprung (210) integral mit der Innenseitenfläche des Arretierhebels ausgebildet ist.

4. Gehäuseanordnung nach Anspruch 1, wobei
eine Wandfläche der Nut (110) nahe an der Gleitnut (120) mit einer Abschrägung versehen ist; und
die Wulst (211) eine geneigte Fläche aufweist, die mit der Abschrägung übereinstimmt.

5. Gehäuseanordnung nach Anspruch 4, wobei eine Wandfläche der Gleitnut (120) nahe an der Nut (110) mit einer Abschrägung versehen ist.

6. Gehäuseanordnung nach einem der Ansprüche 1 bis 5,
wobei der Arretierhebel des Weiteren umfasst:
ein Paar Armabschnitte (201); sowie
einen Verbindungsabschnitt (202), der mit den paarigen Armabschnitten verbunden ist;
wobei die paarigen Armabschnitte jeweils schwenkbar mit den gegenüberliegenden Außenseitenflächen des Gehäusekörpers (100) verbunden sind;
wobei der elastische Vorsprung (210) an einer Innenseitenfläche jedes Armabschnitts der paarigen Armabschnitte ausgebildet ist; und
wobei die Nut (110) und die Gleitnut (120) korrespondierend in jeder Außenseitenfläche der gegenüberliegenden Außenseitenflächen des Gehäusekörpers (100) ausgebildet sind.

7. Gehäuseanordnung nach Anspruch 6, wobei
der Arretierhebel mit einem Fehlersicherungs-Anschlag (220) versehen ist, der so ausgeführt ist, dass er verhindert, dass der Arretierhebel von der vorarretierten Position in einer Richtung entgegengesetzt zu der arretierten Position geschwenkt wird.

8. Gehäuseanordnung nach Anspruch 7, wobei
der Fehlersicherungs-Anschlag sich von jedem Armabschnitt der paarigen Armabschnitte in Richtung der Außenseitenfläche des Gehäusekörpers (100) erstreckt.

9. Gehäuseanordnung nach einem der Ansprüche 1 bis 5, wobei
die Gehäuseanordnung als ein Außengehäuse eines elektrischen Verbinders für elektrische Verbindung mit einer Batterie eines Fahrzeugs mit alternativem Antrieb (New Energy Vehicle) eingesetzt wird.

## Revendications

1. Ensemble boîtier pour connecteur électrique, l'ensemble boîtier comprenant:
un corps de boîtier (100); et
un levier de verrouillage (200) relié de manière pivotante au corps de boîtier (100) et configuré pour pivoter par rapport au corps de boîtier entre une position pré-verrouillée et une position verrouillée;
dans lequel une rainure (110) est formée dans une surface latérale extérieure du corps de boîtier (100), et une saillie élastique (210) est formée sur une surface latérale intérieure du levier de verrouillage (200), et la rainure et la saillie élastique sont configurées de telle sorte que la saillie élastique (210) s'engage dans la rainure (110) lorsque le levier de verrouillage est dans la position pré-verrouillée, et que la saillie élastique (210) se dégage de la rainure lorsque le levier de verrouillage (200) quitte la position pré-verrouillée; dans lequel
une rainure coulissante (120) est également formée dans la surface latérale extérieure du corps de boîtier (100), la rainure coulissante (120) est située à proximité de la rainure (110), et la rainure coulissante est configurée de telle sorte que pendant que le levier de verrouillage pivote de la position pré-verrouillée à la position verrouillée, la saillie élastique (210) dégagée de la rainure (110) entre dans la rainure coulissante (120) et se déplace le long de la rainure coulissante;
dans lequel la saillie élastique (210) comprend en outre:
une feuille élastique (212) s'étendant depuis la surface latérale intérieure du levier de verrouillage; et
un bossage (211) s'étendant et faisant saillie à partir de la feuille élastique
**caractérisé en ce que** les deux extrémités opposées de la feuille élastique (212) s'étendent respectivement à partir de la surface latérale intérieure du levier de verrouillage, les deux côtés de la feuille élastique adjacents aux deux extrémités opposées sont séparés de la surface latérale intérieure du levier de verrouillage, et le bossage (211) est situé au milieu de la feuille élastique (212).

2. Ensemble boîtier selon la revendication 1, dans lequel
le bossage (211) s'obtient en pliant la feuille élastique (212).

3. Ensemble boîtier selon la revendication 1, dans lequel
la saillie élastique (210) est formée d'un seul tenant avec la surface latérale intérieure du levier de verrouillage.

4. Ensemble boîtier selon la revendication 1, dans lequel
une surface de paroi de la rainure (110) près de la rainure coulissante (120) comporte un chanfrein; et
le bossage (211) présente une face inclinée qui correspond au chanfrein.

5. Ensemble boîtier selon la revendication 4, dans lequel
une surface de paroi de la rainure coulissante (120) près de la rainure (110) est formée avec un chanfrein.

6. Ensemble boîtier selon l'une quelconque des revendications 1 à 5, dans lequel le levier de verrouillage comprend en outre:
une paire de parties de bras (201); et
une partie de connexion (202) reliée à la paire de parties de bras;
dans lequel la paire de parties de bras est reliée de manière pivotante aux surfaces latérales extérieures opposées du corps de boîtier (100), respectivement;
dans lequel la saillie élastique (210) est formée sur une surface latérale intérieure de chaque partie de bras de la paire de parties de bras, et
dans lequel la rainure (110) et la rainure coulissante (120) sont formées de manière correspondante dans chaque surface latérale extérieure des surfaces latérales extérieures opposées du corps de boîtier (100).

7. Ensemble boîtier selon la revendication 6, dans lequel
le levier de verrouillage est formé avec un dispositif d'arrêt détrompeur (220) configuré pour empêcher le levier de verrouillage de pivoter à partir de la position pré-verrouillée dans une direction opposée à la position verrouillée.

8. Ensemble boîtier selon la revendication 7, dans lequel
le dispositif d'arrêt détrompeur s'étend depuis chaque partie de bras de la paire de parties de bras vers la surface latérale extérieure du corps de boîtier (100).

9. Ensemble boîtier selon l'une quelconque des revendications 1 à 5, dans lequel
l'ensemble boîtier est utilisé comme boîtier extérieur d'un connecteur électrique pour la connexion électrique à une batterie d'un véhicule à énergie renouvelable.
